# EUROPEAN PATENT SPECIFICATION

(11) **EP 3 365 673 B1**
(45) Date of publication and mention of the grant of the patent: **09.04.2025**
(21) Application number: 16794057.6
(22) Date of filing: 19.10.2016
(51) Int. Cl.: G01N 30/88, G01N 30/64

(54) **METHODS FOR QUANTIFYING N-METHYL-2-PYRROLIDONE**
VERFAHREN ZUR QUANTIFIZIERUNG VON N-METHYL-2-PYRROLIDONE
MÉTHODES POUR LA QUANTIFICATION DE N-METHYL-2-PYRROLIDONE

(30) Priority: 20.10.2015 US 201562243934 P
(43) Date of publication of application: 29.08.2018
(73) Proprietor: SABIC Global Technologies B.V., 4612 PX Bergen op Zoom (NL)
(72) Inventor: PATEL, Prakash Vallabhbhai, Jubail 31961 (SA); AL-REZHAN, Mohammed Hussain, Jubail 31961 (SA); AL-GHAMDI, Mohammed S., Jubail 31961 (SA)
(74) Representative: Patentanwälte Bressel und Partner mbB
(86) International application number: PCT/IB2016/056280
(87) International publication number: WO 2017/068508

(56) References cited:
- US-A- 4 268 361
- US-A- 4 269 668
- US-A- 5 171 693
- MEHDINIA ET AL: "Determination of N-vinyl-2-pyrrolidone and N-methyl-2-pyrrolidone in drugs using polypyrrole-based headspace solid-phase microextraction and gas chromatography-nitrogen-phosphorous detection", ANALYTICA CHIMICA ACTA, ELSEVIER, AMSTERDAM, NL, vol. 587, no. 1, 21 March 2007 (2007-03-21), pages 82 - 88, XP022209586, ISSN: 0003-2670, DOI: 10.1016/J.ACA.2006.12.052
- YOUNGHOON KIM ET AL: "Simulation of 1,3-butadiene extractive distillation process using N-methyl-2-pyrrolidone solvent", KOREAN JOURNAL OF CHEMICAL ENGINEERING, SPRINGER US, BOSTON, vol. 29, no. 11, 13 July 2012 (2012-07-13), pages 1493 - 1499, XP035135209, ISSN: 1975-7220, DOI: 10.1007/S11814-012-0075-3

## Description

### FIELD

The presently disclosed subject matter relates to a method for quantifying N-methyl-2-pyrrolidone in a sample from a steam cracking process of naphtha.

### BACKGROUND

1,3-Butadiene is a product in the petrochemical industry. The simple chemical structure of 1,3-butadiene combined with its low molecular weight and high chemical reactivity can make it a useful building block in the synthesis of other materials. 1,3-Butadiene can be used as a monomer starting material for preparation of various polymers, including synthetic rubbers. 1,3-Butadiene can also be used as a feedstock in the production of adiponitrile or as a substrate in certain Diels-Alder reactions.

1,3-Butadiene can be obtained from different sources, including dehydrogenation of n-butane and reaction of ethanol. 1,3-Butadiene can also be isolated from mixtures of C4 hydrocarbons, e.g. , C4 fractions obtained from steam cracking processes. N-methyl-2-pyrrolidone (NMP) is a solvent that can be used to recover 1,3-butadiene from mixtures of C4 hydrocarbons by an extractive distillation process. After extractive distillation of 1,3-butadiene from C4 hydrocarbon fractions, trace amounts of NMP can remain in the 1,3-butadiene product. The presence of high concentrations of NMP in 1,3-butadiene, e.g., concentrations greater than 5 parts per million (ppm), can have adverse effects on the polymerization and reactive properties of 1,3-butadiene.

Certain methods and systems for determining the level of NMP in a sample are known in the art. EP Patent Application No. 1736829 discloses a purification process for siloxane resins using a solvent, such as N-methylpyrrolidine. The content of nitrogen-containing compounds in the siloxane resin was measured using gas chromatography coupled to a nitrogen phosphorous detector. Camerup et al., Toxicology Letters (2005), discloses a process for the detection of NMP in air or a biological sample using a gas chromatograph coupled to a nitrogen phosphorous detector. Carberup discloses extraction of NMP from the sample prior to detection. Mehdinia et al., Analytica Chimica Acta (2007), discloses a method for determining the level of NMP in a product that includes the desorption of NMP from the product prior to detection using polypyrrole-coated fibers. Akesson and Paulsson, Occupational and Environmental Medicine (1997), discloses a process for the detection of NMP in a sample using gas chromatography coupled to a nitrogen phosphorous detector. However, the process disclosed by Akesson and Paulsson employs desorption of NMP from the sample prior to detection.

Therefore, there remains a need in the art for more efficient methods for determining the presence of NMP in a sample.
In US 4 269 668 A the separation of butadiene-1,3 from other C-4 hydrocarbons of lesser degree of unsaturation by extractive distillation with alkoxynitrile or aqueous alkoxynitrile as selective solvent is carried out by adding to the alkoxynitrile or aqueous alkoxynitrile an organic cosolvent which is dimethyl sulfoxide, sulfolane, butyrolactone, N-methyl pyrrolidone, morpholine, or trimethyl phosphate and/or an inhibitor which is 2,4-dinitrophenol or 2,4-dinitro-ortho-cresol.

### SUMMARY OF THE INVENTION

The presently disclosed invention provides a method for the quantification of N-methyl-2-pyrrolidone (NMP) in a sample from a steam cracking process of naphtha according to claim 1. The dependent claims and the following description disclose specific embodiments.

The method includes introducing a sample including 1,3-butadiene and NMP, if any NMP is present in the sample, into a gas chromatography system coupled to a nitrogen phosphorous detector to produce a first signal.

The method can further include comparing the first signal to a second signal produced from a standard of a known NMP concentration, to quantify the amount of NMP in the sample, where the sample is not concentrated for NMP prior to the introduction of the sample into the gas chromatography system. The sample is directly introduced into the gas chromatography system. The sample is generated from steam cracking of naphtha. In certain embodiments, the standard can include NMP at a concentration of about 100 ppb, about 500 ppb, about 1 ppm, about 5 ppm, or about 10 ppm. In certain embodiments, comparison of the first signal to the second signal can include comparing the area of the first signal with the area of the second signal to determine the amount of NMP in the sample. In certain embodiments, the amount of NMP in the sample can be as low as about 100 ppb.

An exemplary method includes introducing a C4 hydrocarbon sample into the gas chromatography system coupled to a nitrogen phosphorous detector to produce a first signal. The method can further include comparing the first signal to a second signal produced from a standard of a known NMP concentration to quantify the amount of NMP in the sample, where the sample is not concentrated for NMP prior to the introduction of the sample into the gas chromatography system.

In certain embodiments, the standard can include NMP at a concentration of about 100 ppb, about 500 ppb, about 1 ppm, about 5 ppm or about 10 ppm. In certain embodiments, comparison of the first signal to the second signal includes comparing the area of the first signal with the area of the second signal to determine the amount of NMP in the sample.

In certain embodiments, the sample is directly injected into the gas chromatography system. In certain embodiments, the method can further include determining the area under the first signal to determine the amount of NMP in the sample.

### BRIEF DESCRIPTION OF THE DRAWINGS

FIG. 1 is a schematic diagram of a method for determining the concentration of NMP in a sample according to one non-limiting embodiment of the presently disclosed subject matter.
FIG. 2 is a schematic diagram of the existing analytical method for determining the concentration of NMP in a sample.
FIG. 3 is a schematic diagram depicting an exemplary method in accordance with one non-limiting embodiment of the disclosed subject matter.

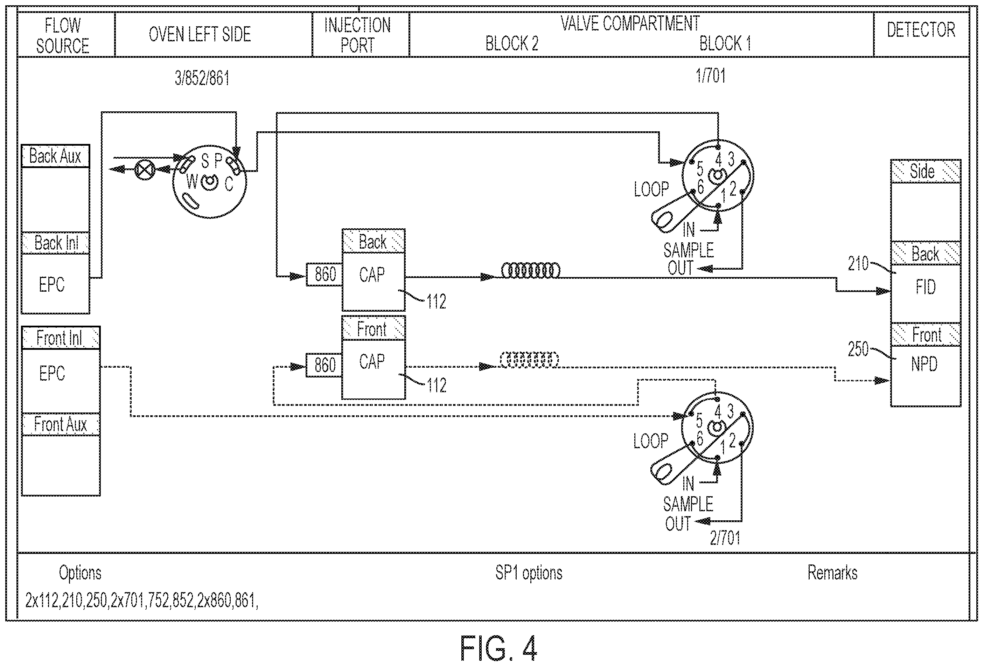

FIG. 4 depicts the configuration of the gas chromatography system used in accordance with one non-limiting embodiment of the disclosed subject matter.
FIG. 5 depicts a reference chromatogram produced by a method according to one non-limiting embodiment of the disclosed subject matter.
FIG. 6 depicts a chromatogram produced by the analysis of a hydrocarbon sample using a method according to one non-limiting embodiment of the disclosed subject matter.

### DETAILED DESCRIPTION

The present disclosure provides methods for measuring the concentration of N-methyl-2-pyrrolidone (NMP) in a hydrocarbon sample. The presently disclosed methods do not require processing of the sample, e.g., extraction of NMP, prior to quantification of NMP in the sample.

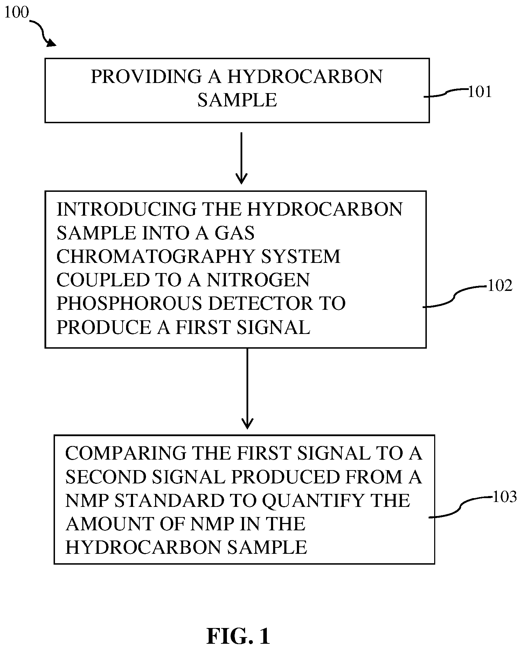

For the purpose of illustration and not limitation, FIG. 1 is a schematic representation of an exemplary method according to the disclosed subject matter. The method 100 includes providing a hydrocarbon sample for analysis 101. The hydrocarbon stream for use in the disclosed methods is generated by stream cracking of naptha, e.g., a C4 hydrocarbon stream. In certain embodiments, the hydrocarbon stream can include olefins, paraffins, 1,3-butadiene or combinations thereof. For example, and not by way of limitation, the hydrocarbon stream can include 1-butene, trans-2-butene, cis-2-butene, normal butane (n-butane), isobutane, propylene, propane, vinyl acetylene, 1,3-butadiene or combinations thereof.

In certain embodiments, the hydrocarbon sample can include 1,3-butadiene. For example, and not by way of limitation, the hydrocarbon sample can include about 5%, about 10%, about 20%, about 30%, about 40%, about 50%, about 60%, about 70%, about 80%, about 90%, about 91%, about 92%, about 93%, about 94%, about 95%, about 96%, about 97%, about 98%, about 99%, about 99.5%, about 99.99% or more of 1,3-butadiene.

In certain embodiments, the hydrocarbon sample can include NMP. For example, and not by way of limitation, the hydrocarbon sample can include about 100 parts per billion (ppb), 500 ppb, 1 parts per million (ppm), 5 ppm, 10 ppm, 20 ppm, 30 ppm, 40 ppm, 50 ppm, 100 ppm, 500 ppm or more. In certain embodiments, the disclosed method can be used to detect NMP that is present at about 100 ppb in the sample to be tested. In certain embodiments, the hydrocarbon sample can include 1,3-butadiene and NMP.

As used herein, the term "about" or "approximately" means within an acceptable error range for the particular value as determined by one of ordinary skill in the art, which will depend in part on how the value is measured or determined, i.e., the limitations of the measurement system. For example, "about" can mean a range of up to 20%, up to 10%, up to 5%, and/or up to 1% of a given value.

The method of the disclosed subject matter further includes introducing the hydrocarbon sample into a gas chromatograph coupled to a nitrogen phosphorous detector (NPD), i.e., gas chromatography system, to a produce a first signal 102. The NPD is used to measure the nitrogen-containing and/or phosphorous -containing organic compounds within the hydrocarbon sample, e.g., NMP. In certain embodiments, the first signal generated by the hydrocarbon sample can include one or more peaks present on a chromatogram. The amount of NMP in the hydrocarbon sample can be determined by calculating the area under the one or more peaks. In certain embodiments, the disclosed gas chromatography system can be coupled to a second detector such as, but not limited to, a flame ionization detector (FID).

"Coupled" as used herein refers to the connection of a system component to another system component by any means known in the art. The type of coupling used to connect two or more system components can depend on the scale and operability of the system. For example, and not by way of limitation, coupling of two or more components of a system can include one or more conduits, tubings, joints, valves, fittings, couplings or sealing elements.

The method can further include comparing the first signal to a second signal produced from a standard of a known NMP concentration to quantify the amount of NMP in the sample 103. For example, and not by way of limitation, the method can include introducing a standard sample having a known NMP concentration into the gas chromatography system to produce a second signal that can be compared to the first signal. In certain embodiments, the standard sample can include NMP at a concentration of about 100 ppb, about 500 ppb, of about 1 ppm, of about 5 ppm, of about 10 ppm or more. In certain embodiments, the standard sample can further include about 95%, about 96%, about 97%, about 98%, about 99% or more of 1,3-butadiene. Alternatively or additionally, the standard sample can include about 100 ppb, about 500 ppb, 100 ppm or 500 ppm of one or more components of a C4 hydrocarbon stream such as, but not limited to, 1-butene, trans-2-butene, cis-2-butene, n-butane and isobutane.

In certain embodiments, the second signal generated by the standard sample can include one or more peaks present on a chromatogram, which can be directly compared to the first signal. For example, and not by way of limitation, the concentration of NMP in the hydrocarbon sample can be determined by calculating the area under the peak of the second signal and comparing it to the area of the peak of the first signal.

In the presently disclosed methods, the hydrocarbon sample is not processed, *e.g.,* concentrated, prior to being introduced into the gas chromatography system, thereby allowing direct injection of the sample into the system to avoid the labor intensive sample preparations performed for the known analytical methods for NMP quantification. For example, and not by way of limitation, NMP is not extracted from the hydrocarbon sample prior to analysis using the disclosed methods. The direct injection of the sample into the gas chromatography system results in a reduction in the amount of time required, *e.g.,* about 60% to about 80%, to determine the amount of NMP in a sample, as compared to known methods.

In addition to reducing the amount of time required to determine the amount of NMP in a sample, the presently disclosed matter allows the use of a smaller aliquot of the hydrocarbon sample to accurately determine the concentration of NMP in the hydrocarbon sample. For example, and not by way of limitation, the volume of the sample can be from about 0.2 ml to about 1 ml. In certain embodiments, the volume of the sample being analyzed in the disclosed method can be about 0.5 ml. In certain embodiments, the size of the sample can be adjusted based on the detection level requirement.

The gas chromatograph and NPD used in the presently disclosed subject matter can be any gas chromatograph and NPD available in the art. For example, and not by way of limitation, the gas chromatograph and/or NPD can be from Agilent Technologies (Santa Clara, CA). In certain embodiments, the gas chromatograph and/or NPD can be obtained from Buck Scientific (East Norwalk, CT). In certain embodiments, the gas chromatograph, NPD and/or fitting accessories can be obtained from Bruker Instruments Inc. and/or Shimadzu Scientific Instruments. For example, and not by way of limitation, a gas chromatograph and NPD system used in the disclosed methods can include a source of a carrier gas, an injector for injecting the sample in the system, a NPD detector and a column located within an oven for ionizing the sample.

The analysis of the hydrocarbon sample by gas chromatography and NPD, as disclosed herein, can be performed under conditions that allow detection of NMP within the hydrocarbon sample. The temperatures at which the disclosed method, *e.g.,* the final temperature, the inlet temperature and the temperature hold, are performed can be customized based on the composition and separation requirement of the component being analyzed. For example, and not by way of limitation, the temperature, *e.g.,* final temperature, of the oven of the gas chromatograph can be from about 150°C to about 300°C, *e.g.,* from about 200°C to about 300°C, from about 225°C to about 300°C, from about 250°C to about 300°C or from about 200°C to about 250°C to allow evaporation of hydrocarbon sample. In certain embodiments, the oven temperature can be about 225°C. In certain embodiments, the injection temperature, *e.g.,* inlet temperature, can be from about 150°C to about 300°C, *e.g.,* from about 200°C to about 300°C, from about 225°C to about 300°C, from about 250°C to about 300°C or from about 200°C to about 250°C. In certain embodiments, the inlet temperature can be about 225°C.

In certain embodiments, the hydrocarbon sample can be subjected to a temperature hold within the oven at a temperature of about 50°C, followed by the heating of the oven to a final temperature (e.g., 225°C) at a heating rate from about 1°C/min to about 30°C/min. In certain embodiments, the heating rate can be about 10°C/min. The temperature hold of the sample can be from about 1 minute to about 10 minutes. For example, the hydrocarbon sample temperature hold can be for about 2 minutes.

The carrier gas used in the gas chromatograph to carry the ionized compounds from the hydrocarbon sample into the column can include an inert gas. For example, and not by way of limitation, the carrier gas can include helium, nitrogen, argon and/or hydrogen. In certain embodiments, the carrier gas is nitrogen. The carrier gas flow rate can be customized based on the profile of the column being used in the disclosed method. For example, and not by way of limitation, the carrier gas can be provided at a gas flow rate of about 1 ml/min to about 10 ml/min, *e.g.,* 2 ml/min. In certain embodiments, the carrier gas can be provided at a gas flow rate of 2 ml/min.

### EXAMPLE

The following example is merely illustrative of the presently disclosed subject matter and should not be considered as limiting the scope of the presently disclosed subject matter in any way.

### Example 1: Determination of NMP in a 1,3 butadiene product by gas chromatography using a NPD detector

N-methyl-2-pyrrolidone (NMP; C₅H₉NO) can be used as a selective solvent for 1,3-butadiene recovery from C4 hydrocarbons streams by an extractive distillation process, as separation of 1,3-butadiene is not possible from C4 hydrocarbons streams by conventional distillation process as butenes, butanes and C4 acetylenes have boiling points close to 1,3-butadiene. In the presence of NMP, these compounds exhibit solubility different from 1,3-butadiene, thereby allowing efficient distillation of 1,3-butadiene from C4 hydrocarbon mixtures.

Following extraction of 1,3-butadiene, NMP is removed by a water wash and a distillation process. However, trace levels of NMP can remain in the 1,3-butadiene product, which can have a deleterious effect upon the reactive and polymerization properties of 1,3-butadiene. The presence of NMP in a 1,3-butadiene product is tolerated at a concentration up to 5 ppm, which is within the product specifications of 1,3-butadiene.

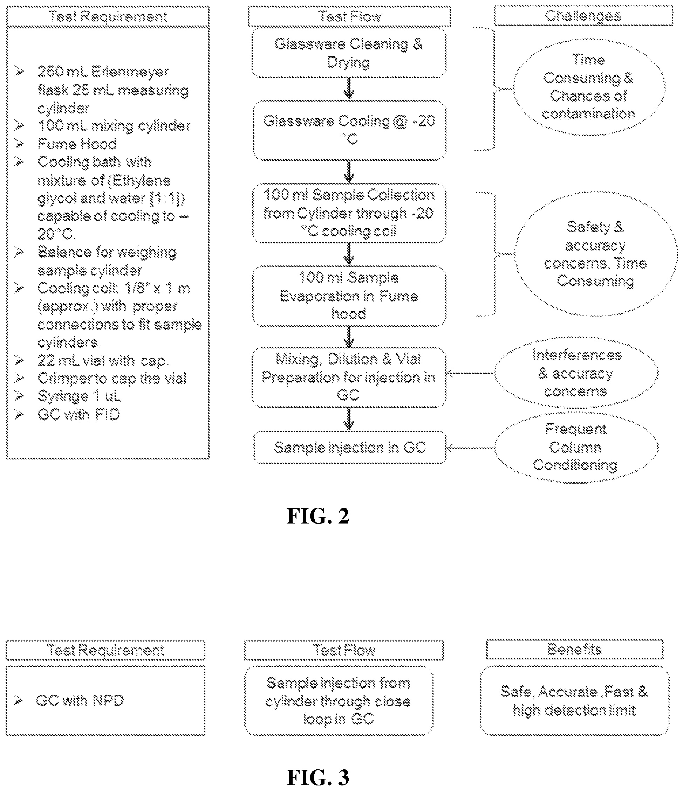

NMP levels in hydrocarbon streams are being analyzed in laboratories based on an existing technology method depicted in FIG. 2. This existing method is a lengthy and time consuming process as it requires about 80 minutes. In particular, the existing method involves multiple steps that includes sample discharge under chilling condition, weighing, evaporation, solvent preparation and sample analysis on a gas chromatograph using a flame ionization detector (FID) (FIG. 2). Sample preparation is one of the most important and critical stages of this method, which results in high emission of hydrocarbons into the atmosphere. There also are safety concerns associated with the existing method due to sample collection at -20°C and venting in open atmosphere as 1,3-butadiene is considered a carcinogen. In addition, the existing analytical procedure has a low NMP detection limit of 1 ppm (based on a 100 g sample) because NMP is a dipolar compound and FID detectors are less sensitive to dipolar components. Further, NMP cannot be detected by FID with direct introduction of sample and requires extraction of NMP from the sample prior to analysis of NMP using gas chromatography coupled to a FID.

As shown in FIG. 2, the known NMP analysis methods, *e.g.,* the ASTM D2505 and the BASF reference methods, require two steps, *i.e.,* sample preparation (concentration) and sample analysis on a gas chromatograph coupled to a FID. To prepare the hydrocarbon sample for use in the BASF method, the 1,3-butadiene/C4 hydrocarbon sample is passed through a cooling coil at -20°C ± 2°C and measured into a 100 ml cooled measuring cylinder and then transferred into a flask containing demineralized (DM) water. The hydrocarbon is then allowed to evaporate. Following complete evaporation of the sample, the extract can then be injected to a gas chromatograph equipped with wide bore methyl silicon column and a Flame Ionization Detector (FID).

In this Example, a method for determining the concentration of NMP in a hydrocarbon sample in accordance with the disclosed subject matter is performed. The presently disclosed methods can be used to estimate the contamination of the product, *e.g.,* the 1,3-butadiene product, by a NMP solvent. As disclosed above, NMP is a dipolar component and FID (Flame Ionization Detector) responds less to dipolar component compared to other hydrocarbons. Therefore, the NPD (Nitrogen Phosphorus Detector) was selected as the detector because it is selective to nitrogen elements and can be used in conjunction with capillary columns for the detection of NMP in a hydrocarbon sample.

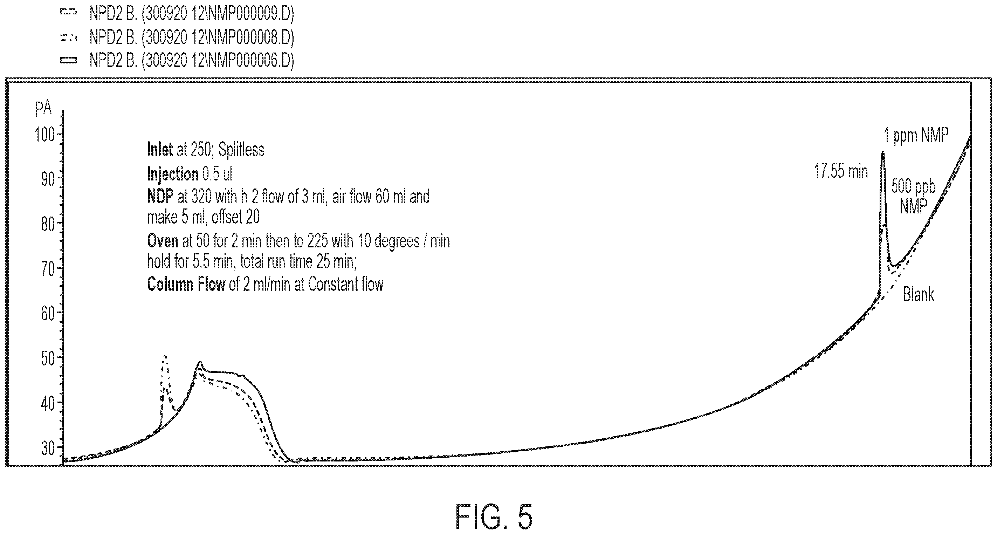

The presently disclosed NMP quantification method was optimized by the performance of several experiments with injection of certified and in-house standards. The certified calibration mixture (*i.e.,* standard), which was supplied by external vendor, included a 1,3-butadiene mixture, 100 ppm of each C4 hydrocarbon stream impurity and 5 ppm NMP. The in-house calibration mixture was prepared to include lower concentrations of NMP such as 500 ppb and 1 ppm to ensure linearity and repeatability of the disclosed method. The conditions under which the method was performed are shown in Table 1 and FIG. 3. FIG. 3 is chromatogram generated after optimization of the method using the conditions shown in Table 1. FIG. 5 depicts a chromatogram that was obtained prior to optimization using a 120 meter column (60 m + 60 m) used without a gas sampling valve (*i.e.,* through syringe) for spike experiments with the same temperature and pressure profile shown in Table 1. The hydrocarbon samples were directly injected without any extraction or treatment process.

**Table 1. Gas chromatography settings of the presently disclosed method**

| **Exemplary Settings of the Analytical method** | |
|---|---|
| **Column:** | DB Wax (60 m x 0.32 mm x 5 µm) |
| **Oven Temperature:** | Initial temperature of 50°C (2.0 min) with a ramp rate of 10°C/min to reach a final temperature of 225°C (5 min). |
| **Carrier gas:** | Nitrogen/Helium |
| **Carrier Gas flow:** | 2 ml/min |
| **Split ratio:** | 25:1 |
| **Inlet temperature:** | 225°C |
| **NPD temperature:** | 250°C |
| **Sample loop volume:** | 0.5 ml |
| **Auxiliary Temperature:** | 80°C |

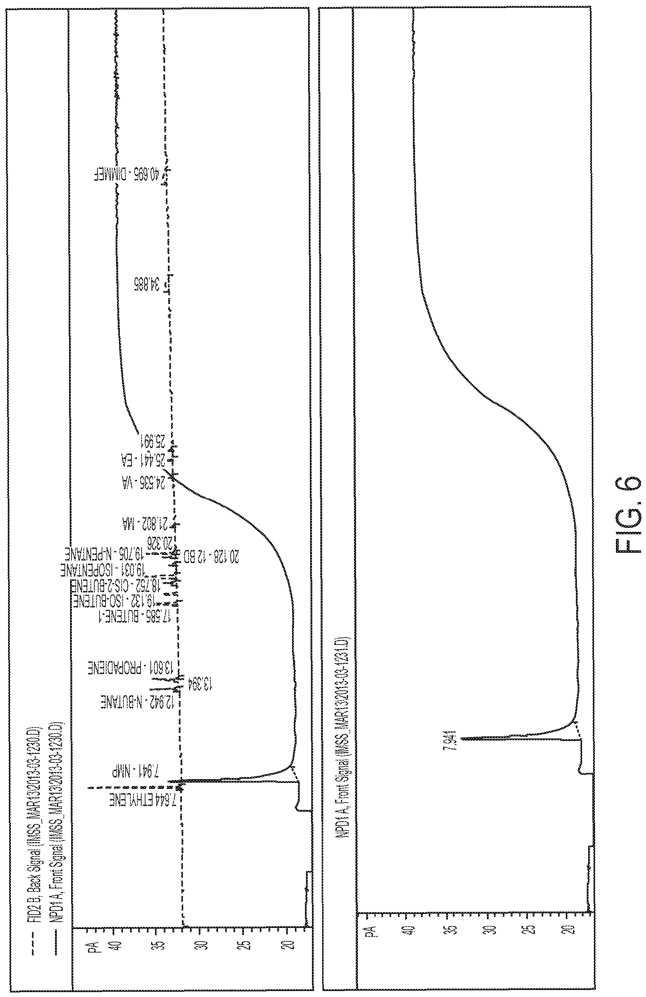

The precision and accuracy of the disclosed method was determined using samples having known NMP concentrations. A certified calibration mixture (supplied by external vendor) was used. The certified standard included a 1,3-butadiene mixture, 100 ppm of each C4 impurity and 5 ppm NMP. As shown in Table 2, NPD is more sensitive than FID for detection of NMP (Table 2). FIG. 6, which compares the detection of NMP using the disclosed method (top panel) versus the method using FID (lower panel), shows that the disclosed method displays a higher sensitivity for NMP. The samples used in FIG. 6 was the certified calibration mixture discussed above. These results indicate that the disclosed method can be used to detect low concentration of NMP in a hydrocarbon sample. For example, the disclosed method can be used to detect concentrations of NMP as low as 100 ppb (Table 2), which is significantly more sensitive than the detection limit of existing methods.

The presently disclosed method is a more time efficient and a more reliable detection of NMP in a hydrocarbon sample, and results in a 67% reduction in the amount of time needed to perform known analytical methods. In addition, the currently disclosed method is safer and more environment friendly, and provides a highly sensitive, accurate and reproducible method for determining the presence of NMP within a hydrocarbon sample with minimum attention time and less chemical exposure.

**Table 2. Response Factor, Linearity and MDL determination**

| **S.N** | **Component** | **Conc. (ppm)** | **Area of Component** | | | **Average Area** | **Response Factor** |
|---|---|---|---|---|---|---|---|
| 1 | NMP | 500 | 25.171 | 26.661 | 25.189 | 25.673 | 0.01947 |
| 2 | | 1 ppm | 51.871 | 52.127 | 51.772 | 51.923 | 0.01925 |
| 3 | | 5 ppm | 262.13 | 262.78 | 261.87 | 262.26 | 0.01906 |

In addition to the various embodiments depicted and claimed, the disclosed subject matter is also directed to other embodiments having other combinations of the features disclosed and claimed herein. As such, the particular features presented herein can be combined with each other in other manners within the scope of the disclosed subject matter such that the disclosed subject matter includes any suitable combination of the features disclosed herein. The foregoing description of specific embodiments of the disclosed subject matter has been presented for purposes of illustration and description. It is not intended to be exhaustive or to limit the scope of the claims to those embodiments disclosed.

It will be apparent to those skilled in the art that various modifications and variations can be made in the compositions and methods of the disclosed subject matter without departing from the scope of the appended claims. Thus, it is intended that the disclosed subject matter include modifications and variations that are within the scope of the appended claims.

## Claims

1. A method for the quantification of N-methyl-2-pyrrolidone (NMP) in a sample from a steam cracking process of naphtha, comprising
introducing a sample comprising NMP, if any, into a gas chromatography system coupled to a nitrogen phosphorous detector to produce a first signal for quantifying the amount of NMP in the sample,
wherein the sample is generated from steam cracking of naphtha,
wherein the sample is directly introduced from the steam cracking into the gas chromatography system without processing the sample prior to introducing the sample into the gas chromatography system,
wherein the sample is not concentrated for NMP prior to the introduction of the sample into the gas chromatography system,
said method being **characterized in that** the sample comprises 1,3-butadiene.

2. The method of claim 1, wherein the volume of the sample is from 0.2 ml to 1 ml, or 0.5 ml.

3. The method of claim 1, further comprising determining the area under the first signal to determine the amount of NMP in the sample.

4. The method of claim 1, comprising:
comparing the first signal to a second signal produced from a standard of a known NMP concentration, to quantify the amount of NMP in the sample.

5. The method of claim 4, wherein the concentration of NMP in the standard is selected from the group consisting of about 500 ppb, about 1 ppm, about 5 ppm, or about 10 ppm.

6. The method of claim 4, wherein comparing the first signal to the second signal comprises
comparing the area of the first signal with the area of the second signal to determine the amount of NMP in the sample.

7. The method of claim 1, wherein the sample is a C4 hydrocarbon sample and the method comprises
comparing the first signal to a second signal produced from a standard of a known NMP concentration, to quantify the amount of NMP in the sample.

8. The method of claim 7, wherein the concentration of NMP in the standard is selected from the group consisting of about 500 ppb, about 1 ppm, about 5 ppm, or about 10 ppm.

9. The method of claim 7, wherein comparing the first signal to the second signal comprises
comparing the area of the first signal with the area of the second signal to determine the amount of NMP in the sample.

10. The method of claim 7, wherein the amount of NMP in the sample can be as low as about 100 ppb.

11. The method of claim 7, wherein the volume of the sample is from 0.2 ml to 1 ml, or 0.5 ml.

## Patentansprüche

1. Verfahren zur Quantifizierung von N-Methyl-2-pyrrolidon (NMP) in einer Probe aus einem Steamcrackverfahren von Naphtha, umfassend
Einführen einer NMP enthaltenden Probe, falls vorhanden, in ein Gaschromatographiesystem, das mit einem Stickstoff-Phosphor-Detektor gekoppelt ist, um ein erstes Signal zur Quantifizierung der NMP-Menge in der Probe zu erzeugen,
wobei die Probe aus dem Steamcracken von Naphtha gewonnen wird,
wobei die Probe direkt aus dem Steamcracken in das Gaschromatographiesystem eingeführt wird, ohne die Probe vor der Einführung der Probe in das Gaschromatographiesystem zu verarbeiten,
wobei die Probe vor der Einführung der Probe in das Gaschromatographiesystem nicht auf NMP konzentriert wird,
wobei das Verfahren **dadurch gekennzeichnet ist, dass** die Probe 1,3-Butadien enthält.

2. Verfahren nach Anspruch 1, wobei das Volumen der Probe von 0,2 ml bis 1 ml oder 0,5 ml beträgt.

3. Verfahren nach Anspruch 1, umfassend ferner die Bestimmung der Fläche unter dem ersten Signal, um die Menge an NMP in der Probe zu bestimmen.

4. Verfahren nach Anspruch 1, umfassend:
Vergleichen des ersten Signals mit einem zweiten Signal, das von einem Standard mit bekannter NMP-Konzentration erzeugt wird, um die Menge an NMP in der Probe zu quantifizieren.

5. Verfahren nach Anspruch 4, wobei die NMP-Konzentration im Standard ausgewählt ist aus der Gruppe bestehend aus etwa 500 ppb, etwa 1 ppm, etwa 5 ppm oder etwa 10 ppm.

6. Verfahren nach Anspruch 4, wobei das Vergleichen des ersten Signals mit dem zweiten Signal das Vergleichen der Fläche des ersten Signals mit der Fläche des zweiten Signals umfasst, um die Menge an NMP in der Probe zu bestimmen.

7. Verfahren nach Anspruch 1, wobei die Probe eine C4-Kohlenwasserstoffprobe ist und das Verfahren umfasst:
den Vergleich des ersten Signals mit einem zweiten Signal, das von einem Standard mit bekannter NMP-Konzentration erzeugt wird, um die Menge an NMP in der Probe zu quantifizieren.

8. Verfahren nach Anspruch 7, wobei die NMP-Konzentration im Standard ausgewählt ist aus der Gruppe bestehend aus etwa 500 ppb, etwa 1 ppm, etwa 5 ppm oder etwa 10 ppm.

9. Verfahren nach Anspruch 7, wobei das Vergleichen des ersten Signals mit dem zweiten Signal das Vergleichen der Fläche des ersten Signals mit der Fläche des zweiten Signals umfasst, um die Menge an NMP in der Probe zu bestimmen.

10. Verfahren nach Anspruch 7, wobei die Menge an NMP in der Probe bis zu etwa 100 ppb betragen kann.

11. Verfahren nach Anspruch 7, wobei das Volumen der Probe von 0,2 ml bis 1 ml oder 0,5 ml beträgt.

## Revendications

1. Méthode de quantification de la N-méthyl-2-pyrrolidone (NMP) dans un échantillon provenant d'un procédé de vapocraquage du naphta, comprenant
introduire un échantillon comprenant de la NMP, le cas échéant, dans un système de chromatographie en phase gazeuse couplé à un détecteur de phosphore d'azote pour produire un premier signal permettant de quantifier la quantité de NMP dans l'échantillon,
L'échantillon provient du vapocraquage du naphta,
l'échantillon est introduit directement du vapocraquage dans le système de chromatographie en phase gazeuse sans traitement préalable de l'échantillon,
l'échantillon n'est pas concentré en NMP avant d'être introduit dans le système de chromatographie en phase gazeuse,
cette méthode est **caractérisée par le fait que** l'échantillon comprend du 1,3-butadiène.

2. Méthode de la revendication 1, dans laquelle le volume de l'échantillon est compris entre 0,2 ml et 1 ml, ou 0,5 ml.

3. Méthode de la revendication 1, comprenant en outre la détermination de l'aire sous le premier signal pour déterminer la quantité de NMP dans l'échantillon.

4. Méthode de la revendication 1, comprenant:
comparer le premier signal à un second signal produit à partir d'un étalon d'une concentration connue de NMP, pour quantifier la quantité de NMP dans l'échantillon.

5. Méthode de la revendication 4, dans laquelle la concentration de NMP dans l'étalon est choisie dans le groupe constitué d'environ 500 ppb, d'environ 1 ppm, d'environ 5 ppm ou d'environ 10 ppm.

6. Méthode de la revendication 4, dans laquelle la comparaison du premier signal au second signal comprend la comparaison de la zone du premier signal avec la zone du second signal pour déterminer la quantité de NMP dans l'échantillon.

7. Méthode de la revendication 1, dans laquelle l'échantillon est un échantillon d'hydrocarbures en C4 et la méthode consiste à comparer le premier signal à un second signal produit à partir d'un étalon de concentration connue de NMP, afin de quantifier la quantité de NMP dans l'échantillon.

8. Méthode de la revendication 7, dans laquelle la concentration de NMP dans l'étalon est choisie dans le groupe constitué d'environ 500 ppb, d'environ 1 ppm, d'environ 5 ppm ou d'environ 10 ppm.

9. Méthode de la revendication 7, dans laquelle la comparaison du premier signal au second signal comprend la comparaison de la surface du premier signal avec la surface du second signal pour déterminer la quantité de NMP dans l'échantillon.

10. Méthode de la revendication 7, dans laquelle la quantité de NMP dans l'échantillon peut être aussi faible qu'environ 100 ppb.

11. Méthode de la revendication 7, dans laquelle le volume de l'échantillon est compris entre 0,2 ml et 1 ml, ou 0,5 ml.
